# EUROPÄISCHE PATENTANMELDUNG

(11) **EP 4 520 796 A1**
(43) Veröffentlichungstag der Anmeldung: **12.03.2025**
(21) Anmeldenummer: 23196541.9
(22) Anmeldetag: 11.09.2023
(51) Int. Cl.: C09D 11/107, C09D 11/106, C09D 11/102, C09D 11/03, C09D 11/037, B41M 5/52, B41M 7/00

(54) **STERILISATIONSBESTÄNDIGER, MIT STRAHLENHÄRTENDEN LACKEN BEDRUCKBARER UND TIEFZIEHFÄHIGER, WÄSSERIGER DRUCKVORLACK**

(71) Anmelder: Constantia Teich GmbH, 3205 Weinburg (AT)
(72) Erfinder: Kaul, Nicole, 3100 Sankt Pölten (AT); Grötz, Maximilian, 3473 Mühlbach (AT); Veit, Werner, 3500 Krems (AT); Anna, Wurmb, 3200 Obergrafendorf (AT); Bianca, Dirnecker, 3121 Karlstetten (AT)
(74) Vertreter: Patentanwälte Barger, Piso & Partner

(57) **Zusammenfassung**

Die Erfindung betrifft einen mit strahlenhärtenden Druckfarben und Lacken bedruckbaren, wässeriger Druckvorlack, insbesondere für Folien aus Aluminium oder Aluminiumlegierung und insbesondere für sterilisationsbeständige und tiefziehfähige Anwendungen, z.B. für PET Food und Human Food Behältnisse und Verschluss-Systeme, wie Deckel, und Pharmaverpackungen.

Die Erfindung ist dadurch gekennzeichnet, dass der Primer, in Gewichtsprozent, bezogen auf die Summe der genannten Bestandteile A) bis D):

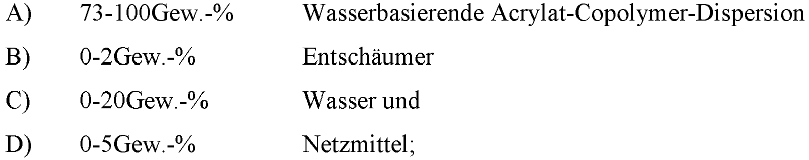

die Grenzwerte jeweils mitumfassend, enthält.

## Beschreibung

Die Erfindung betrifft einen mit strahlenhärtenden, insbesondere UV-härtenden, Druckfarben und Lacken bedruckbaren, wässerigen Druckvorlack (Primer), der nach dem Aufbringen auf ein Substrat, insbesondere aus Aluminium, dessen Tiefziehen und Sterilisieren erträgt, entsprechend der US 2010/0267301 A1 und dem Oberbegriff des Anspruches 1.

Die US 2010/0267301 A1 offenbart einen Primer aus einem wasserlöslichen Polymer und einer ethylenisch-ungesättigten Verbindung zur Aufbringung auf ein Substrat und anschließendes Bedrucken und UV-härten. Insbesondere Aufkleber für Waren aller Art können so hergestellt werden. Über das Ertragen von Tiefziehvorgängen wird schon wegen der Natur der Verwendung ebenso wenig ausgesagt wie über das Ertragen einer nachträglichen Sterilisation. Es handelt sich somit um wässerige Vorlacke zum anschießendem UV-Farbenauftragung wobei reaktive Acrylate in die wässerige Dispersion eingetragen werden, um eine ausreichende Haftung der UV Farbe auf dem Druckvorlack zu erzielen. Dies kann bei Etiketten hingenommen werden, führt aber unter Umständen bei Lebensmittelverpackungen zu einer unerwünschten Migration.

Allgemein werden aktuell als Primer wässerige Lacke verwendet, die entweder sterilisationsbeständig aber nicht mit strahlenhärtenden Druckfarben bedruckbar oder mit strahlenhärtenden Druckfarben bedruckbar aber nicht sterilisationsbeständig sind.

Es werden für derartige Primer auch Acrylat-Copolymer-Dispersionen verwendet, auf der Basis von Produkten, die am Markt z.B. unter der Bezeichnung OLI Aqua 1K Folienlack farblos von OLI-Lacke, oder unter der Bezeichnung Joncryl 1687 bzw. Joncryl 1689 von BASF erhältlich sind

Von den lösungsmittelhaltigen Primern auf diesem Gebiet ist der in der DE 103 32 723 A1 offenbarte zu nennen: Eine lösungsmittelhaltige Beschichtung aus mindestens einem hydroxylgruppenhaltigen gesättigtem Copolymer, einem Phenol-Formaldehyd-Harz, einem Benzoguanamin-Formaldehyd-harz und/oder einem blockierten Polyisocyanat, Katalysatoren, Lösemitteln und gegebenenfalls Hilfs- und Zusatzstoffen. Als bedeutsam angesehen wird, dass die Zusammensetzung frei von PVC, BPA, BADGE, BFDGE, NOGE, etc., ist. Die gute Haftung, Sterilisierbarkeit und Verformbarkeit (Tiefziehbarkeit) wird dabei hervorgehoben. Die Nachteile der Verwendung von organischen Lösemitteln werden stillschweigend in Kauf genommen.

Es soll schon hier festgehalten werden, dass die Eigenschaften sterilisierbar bzw. tiefziehbar sich darauf beziehen, dass ein Substrat, auf dem der Primer aufgebracht und gehärtet wurde, anschließend der strahlenhärtende Lack aufgebracht und gehärtet wird, dass anschließend ein Tiefziehvorgang, beispielsweise zur Bildung einer Schüssel, erfolgt, dass die Schüssel gefüllt und verschlossen und anschließend sterilisiert wird, und dass der Primer dies alles ohne abblättern, ohne Blasen zu werfen, ohne die Haftung zum Lack zu verlieren, etc., etc. erträgt.

Von den strahlenhärtenden Lacken sind insbesondere die UV-Lacke interessant, da die Druck- und Bestrahlungsvorrichtungen kostengünstig arbeiten; hier werden eventuelle Decklacke über der eigentlichen Druckschicht stillschweigend immer mit inkludiert. Derartige brauchbare, insbesondere acrylat-basierte Druckfarben und Überlacke werden von diversen Druckfarbenherstellern angeboten, z.B. SunChemical, Siegwerk, Flint, Sakata, Wikoff Color Corporation und Toyo, die Fachperson kann in Kenntnis der Erfindung problemlos ihre Auswahl treffen.

Über das Tiefziehen und die dabei auftretenden Beanspruchungen muss nicht viel gesagt werden, es sind dreidimensionale Zugvorgänge, die insbesondere auf Grenzflächen unterschiedlicher Materialien große Wirkung haben und somit hohe Haftfähigkeit neben den duktilen Eigenschaften der betroffenen Materialien verlangen.

Sterilisieren ist hier insbesondere eine Autoklavierung mit Temperaturen von 115°C bis 135°C, zumeist rund 131°C, über einem Zeitraum von 45min und einem Überdruck von ca. 2bar, das alles im gesättigten Wasserdampf, stellt somit eine harte Beanspruchung für die äußere Oberfläche und die darauf aufgebrachten Schichten aller Art dar.

Es sind somit die Anwendungsgebiete des zu schaffenden Primers insbesondere Folien aus Aluminium oder Aluminiumlegierung, die mit strahlenhärtenden Farben bedruckt und bestrahlt/gehärtet werden, sodann tiefgezogen, gefüllt, verschlossen und sterilisiert werden. Spezielle Anwendungsgebiete sind PET Food und Human Food Behälter und Verschluss-Systeme (Deckel, Platinen), Pharmaverpackungen und alle Verpackungen, die ein solches Procedere durchmachen.

Eine Unteraufgabe der Erfindung ist die Schaffung eines farbigen Primers, der die angestrebten Eigenschaften erfüllt, eine andere die Schaffung eines Primers, der zufolge seiner Hafteigenschaften auch bei nicht-sterilisierbarer Anwendung und/oder nichttiefziehen vorteilhaft anwendbar ist.

Es ist somit im Kern Aufgabe und Ziel der Erfindung, die im Stand der Technik mit lösungsmittelhältigen Primern erzielten Eigenschaften zu erhalten und ohne organische Lösemittel auszukommen.

Um diese Aufgaben zu erfüllen bzw. diese Ziele zu erreichen, wird ein Primer entsprechend den Merkmalen im kennzeichnenden Teil des Anspruches 1 angegeben. Mit anderen Worten, der Primer enthält:

| | | |
|---|---|---|
| A) | 73-100% | Wasserbasierende Styrol-Acrylat-Copolymer-Dispersion |
| B) | 0-2% | Entschäumer |
| C) | 0-20% | Wasser und |
| D) | 0-5% | Netzmittel; |

alle Prozentangaben in der gesamten Anmeldung und den Ansprüchen in Gewichtsprozent (wenn nicht anders angegeben), hier bezogen auf die Summe der Bestandteile A) bis D); die Grenzwerte sind jeweils inkludiert, sodass im Extremfall auch nur der Bestandteil A) enthalten sein kann. Es ist darauf hinzuweisen, dass die erfindungsgemäße Zusammensetzung ohne die eingangs erwähnten reaktiven Acrylate auskommt.

Ein derartiger Primer erfüllt die angegebenen Aufgaben voll und ganz; wenn auch das wichtigste Anwendungsgebiet sterilisierte Verpackungen sind, ist doch die Robustheit und Haftfähigkeit des erfindungsäßen Primers auf Aluminiumoberflächen aller Art so groß, dass er vorteilhaft auch auf nicht-sterilisierten und/oder nicht-tiefgezogenen Behältern (insbesondere Platinen) eingesetzt werden kann.

Zu den einzelnen Bestandteilen A) bis D) ist folgendes auszuführen:
Ad A): Dispersion: Es handelt sich um eine Dispersion eines Styrol-Acrylat-Copolymers in Kombination mit einem Aminoharz, bevorzugt einem Benzoguanaminharz, somit bevorzugt um ein Styrol-Methacrylat-Benzoguanamin-Copolymer.

Dabei beträgt der Wasseranteil 55% bis 65%, bevorzugt zwischen 59% und 61%. Dieser Wasseranteil wird bei der Komponente C) nicht berücksichtigt. Das Emulgatorsystem ist anionisch; der pH-Wert liegt bei 5,1±0,5; die Viskosität [MPa.s] bei 450±300 (BF#3/100/20°C). Die Glasübergangstemperatur liegt bei über 40°C.

Bevorzugt wird eine Komponente A), bei der das Acrylpolymer Butylacrylat als wesentliche Basis zeigt, Polyethylenglycol (PEG) ebenso vorliegt wie langkettige Aliphate. Besonders bevorzugt zeigt das Styrolacrylat Polystyrol, langkettige Aliphate in mittlerer Konzentation und ist frei von Acrylat-Resten. Ebenfalls bevorzugt zeigt das Copolymer ein Acrylatharz auf der Basis von Methylmethacrylat / n-BA / nBMA mit geringem Anteil an PEG.

Ad B) Entschäumer: Schaum ist eine stabile Verteilung von Gasbläschen (meist Luftbläschen) in einer Flüssigkeit. Reine Flüssigkeiten schäumen nicht, erst wenn Substanzen mit tensidischer Struktur in der Flüssigkeit vorhanden sind, kann stabiler Schaum entstehen. tensidische Substanzen mit ihrem hydrophilen und hydrophoben Anteil orientieren sich bevorzugt an Grenzflächen zwischen Flüssigkeit und Luft. Eingeschlossene und eingetragene Luft in einer Flüssigkeit stellt eine solche Grenzfläche dar. Tensidische Substanzen orientieren sich an dieser Oberfläche und stabilisieren so die Luftblasen - stabiler Schaum entsteht.

Bei der Formulierung (Herstellung) von Lacken werden viele Rohstoffe eingesetzt, die tensidische bzw. oberflächenaktive Substanzen enthalten: Das Bindemittel selbst (vor allem in Dispersionen und Emulsionen für wässerige Formulierungen); Oberflächen- und Substratbenetzungsadditive; Wachse und Wachsdispersionen; und andere Rohstoffe neigen aufgrund ihrer Struktur schließlich zur Schaumbildung.

Wirksame Entschäumer sind gezielt unverträglich im zu enzschäumenden Beschichtungssystem. Entsprechend sind auch Entlüfter zu verwenden, die allerdings im Gegensatz zu Entschäumern nicht an der Oberfläche, sondern bereits in der wässerigen Phase wirksam sind. Dabei ist aber entscheidend, eine gute Balance zwischen Entschäumer und Dispersion hinsichtlich Wirksamkeit und Verträglichkeit zu finden. Ist der Entschäumer zu verträglich mit der Dispersion, wirkt er nicht entschäumend, ist er zu unverträglich, kommt es zu Störungen wie Kratern, Fischaugen oder Trübungseffekten. Es gibt eine breite Palette an chemischen Wirkstoffen, die eine gezielte Unverträglichkeit in Beschichtungssystemen erzeugen können. Hier einige Beispiele:
Organische Polymere, wie Polyether oder Polyacrylate;
Dimethylpolysiloxane (Silikonöle);
Floursilicone.

Diese Substanzen werden häufig als Entschäumer bzw. für die Formulierung von Entschäumern verwendet. Dabei werden diese Grundsubstanzen in folgenden Varianten angeboten:
Als Produkte mit 100% Wirkstoffgehalt;
Als Anlösungen in organischen Lösungsmitteln, diese Lösungsmittel werden bei der obigen Mengenverteilung nicht mitgezählt;
Als Emulsionen in Wasser, speziell für Anwendungen in wässerigen Formulierungen. In diesem Fall ist im vorliegenden Fall das Wasser zum Wasser, der Wirkstoff zum Entschäumer zu rechnen.

Anhand dieser Grundlagen kann der Fachmann auf dem Gebiet der Entschäumung von Lack bzw. Druckvorlack, insbesondere für Folien, in Kenntnis der Erfindung und eventuell einiger, weniger Versuche die beste Auswahl treffen.

Ad C): Wasser: wird zur Einstellung der Viskosität während des Auftrags und des Festkörpers, um die Verarbeitung und Auftragung des Flächengewichtes zu steuern, verwendet. Die enthaltene Menge hängt auch von der verwendeten Maschine und der Natur und den Anteilen der anderen Bestandteile ab; der Fachmann auf dem Gebiet der Lackierung von Folien kann in Kenntnis der Erfindung und eventuell einiger, weniger Versuche die optimale Menge leicht bestimmen.

Ad D): Netzmittel: ist besonders bei schwierig zu benetzenden Untergründen (z.B. bei harten, walzöl-kontaminierten, nicht batch-geglühten Aluminiumrollen) notwendig, kann aber auch für eine Verbesserung bei weichen Aluminiumfolien (batch-geglühten Aluminiumrollen) für eine bessere Benetzung der Substratoberfläche eingesetzt werden. Es handelt sich hierbei um eine oberflächenaktive Substanz, die die Oberflächenspannung einer Flüssigkeit oder Lackes reduzieren, indem sie sich an der Grenzfläche anreichern und selbst eine neue, aber weniger energiereiche Grenzfläche generieren.

Ort des Geschehens ist eine Grenzfläche und wenige Moleküle zwischen Substrat und Polymer. Diese sind ausschlaggebend für einen optimalen Materialschutz und ein makelloses Erscheinungsbild. Die Grenzflächenspannung einer Flüssigkeit oder Lackes zur Grenzfläche bezeichnet man als Oberflächenspannung. Um Teilchen aus dem Inneren einer Flüssigkeit oder Lackes an die Grenzfläche zu bringen, muss Energie aufgewendet werden. Die Oberfläche der Flüssigkeit oder Lackes wird vergrößert. Zwischen den Molekülen der Flüssigkeit oder Lackes wirken anziehende Kräfte. Im Inneren heben sich diese Kräfte auf, jedoch nicht an der Grenzfläche. Die resultierende Kraft ist hier ins Lackinnere gerichtet. Die am weitesten verbreitete Methode zur Verbesserung der Benetzung ist der Zusatz von Substratnetzadditiven zur flüssigen Phase.

Aufgabe aller Substratnetzadditive ist es, die Oberflächenspannung der flüssigen Phase zu senken. Dies wird am besten durch Tenside erreicht, die einen hydrophilen und einen hydrophoben Teil besitzen. Der hydrophobe Teil wird aus der Volumenphase gedrängt, der hydrophile Teil orientiert sich in Richtung Wasserphase. Die so geordneten Tensidmoleküle bilden eine neue, niederenergetische Lackoberfläche aus, die nunmehr die niederenergetische Oberfläche des zu beschichtenden Substrates leicht benetzen kann. Zur Erzielung derartiger Effekte werden vorwiegend Silicontenside, Kohlenwasserstoff- oder Fluortenside verwendet.

Kohlenwasserstofftenside, insbesondere solche mit geradkettigen aliphatischen Gruppen, bilden einen dicht gepackten Film, ihr Flächenbedarf ist gering. Bei Fluortensiden ist die Kohäsion zwischen den Perfluoralkylgruppen besonders gering, entsprechend niedrig ist auch die Grenzflächenspannung. Tenside mit Methylpolysiloxanen als hydrophober Gruppe sorgen für Grenzflächenspannungen, die zwischen den Werten für Tenside mit reinen Alkylgruppen und für Tenside mit fluorierten Gruppen liegen.

Fluortenside sind lebensmittelrechtlich nicht zugelassen und eignen sich daher auch nicht für Lebensmittelverpackungen. Auf diesem Gebiet kommen daher nur Silicontenside oder Kohlenwasserstofftenside in Frage.

Weitere Bestandteile, wie die weiter unten erwähnten Pigmente, aber auch Stoffe zum Verändern der Viskosität, etc., können enthalten sein, deren Masse bzw. Gewicht werden aber in die obige Zusammensetzung nicht mit eingerechnet.

### Strategien:

Betreffend Komponenten A) und D): Durch Änderung der Anteile der Monomere zum Vernetzer (z.B. Aminoharzkomponenten) in der wässerigen Dispersion kann die Benetzung auf dem Aluminium und Bedruckung mit UV Druckfarben gesteuert werden. Durch Zugabe eines geeigneten Emulgators, passend zur wässerigen Dispersion und durch einstellen der optimalen Glasübergangstemperatur werden die Eigenschaften des Bindemittels und des daraus resultierenden Lackes hinsichtlich UV-Bedruckbarkeit eingestellt.

Bei Substraten mit guten Oberflächeneigenschaften, geringen Beanspruchungen beim Tiefziehen und speziell auch, wenn kein Sterilisieren stattfindet, kann die Komponente A) für sich allein verwendet werden, die Fachperson kann anhand einiger weniger, einfacher, Versuche feststellen, ob dies der Fall ist oder nicht.

Auch wenn es der Fachperson klar ist, soll der Vollständigkeit halber darauf hingewiesen werden, dass der Druckvorlack durch alle im Stand der Technik für die Aufbringung von Primern bekannten Verfahren aufgebracht werden kann. Speziell bewährt hat sich das sogenannte Walzenauftragsverfahren, bei dem der Druckvorlack auf das auf hohe Objekttemperatur (zwischen 160°C und 185°C, vorzugsweise zwischen 166-177°C) erwärmte Substrat (Aluminiumfolie) aufgebracht und getrocknet wird. In einem zweiten Arbeitsschritt kann (mit oder ohne Pause, mit oder ohne Zwischenlagerung) die Druckfarbe und gegebenenfalls ein Überlack (UV/strahlenhärtend) auf den bereits getrockneten Primer aufgetragen werden, womit die angestrebten, erfindungsgemäßen Eigenschaften erreicht werden.

Wenn es gewünscht wird, können dem Primer im Zuge seiner Herstellung, die durch einfaches Zusammenmischen seiner Bestandteile erfolgt, auch Pigmente zugesetzt werden, um eine gewünschte Farbe des Primers zu erreichen. Diese Pigmente müssen gegebenenfalls für Lebensmittelverpackungen geeignet sein und das Sterilisieren ertragen, beim Tiefziehen spielen sie kaum eine Rolle. In Kenntnis der Erfindung kann die Fachperson aus einer großen Anzahl von Pigmenten, die am Markt erhältlich sind, und deren Eigenschaften leicht eruiert werden können, die Wahl treffen.

Als Pigmente für sterilisationsbeständige Anwendungen werden bevorzugt synthetische organische Pigmente verwendet die nach ihrem chemischen Aufbau sowohl in die Gruppe der sog. Azopigmente als auch der sog. "Nichtazopigmente" oder "Polycyclischen Pigmente" fallen. Wichtige Azopigment-Klassen sind die beta-Naphthol-Pigmente, die Naphthol AS-Pigmente, die Pyrazolon-Pigmente, die N-Acetessigsäureanilid-Pigmente, die Azometallkomplex-Pigmente und die Diaryl-Gelb-Pigmente. Wichtige Polycyclische Pigmentklassen sind die Chinacridon-Pigmente, die Diketopyrrolo-pyrrol-Pigmente, die Dioxazin-Pigmente, die Perylen-Pigmente, die Isoindolinon-Pigmente und die KupferPhthalocyanin-Pigmente. Speziell bei Gelb werden besonders für sterilisationbeständige Anwendungen Pigment Gelb 83 (eine chemische Verbindung aus der Gruppe der Disazo- und Diarylpigmenten verwendet. Bei den Rotpigmenten für Sterilanwendungen werden vorteilhafterweise Pigment Rot 146 (Mono-Azopigment), 184 (Naphtol AS Pigment) , 254 (3,6-Bis (4-chlorphenyl) -2,5-dihydropyrrolo [3,4-c] pyrrol-1,4-dion) verwendet. Abschließend sollen Fachpersonen der Zukunft noch darauf hingewiesen werden, dass der Auftrag des Primers, des Lackes, eventuell des Decklackes und gegebenenfalls weiterer Schichten auf der Seite der Folie erfolgt, die die spätere Außenseite der Schale bzw. Verpackung bildet. Natürlich erträgt der Primer die angegebenen Beanspruchungen auch dann, wenn er auf der Innenseite aufgebracht wird, doch ist dies nur in wenigen Fällen vorteilhaft oder auch nur sinnvoll.

## Patentansprüche

1. Sterilisationsbeständiger, mit strahlenhärtenden Druckfarben und Lacken bedruckbarer, wässeriger Druckvorlack, insbesondere für Folien aus Aluminium oder Aluminiumlegierung und insbesondere für sterilisationsbeständige und tiefziehfähige Anwendungen, z.B. für PET Food und Human Food Behältnisse und Verschluss-Systeme, wie Deckel, und Pharmaverpackungen, **dadurch gekennzeichnet, dass** er, in Gewichtsprozent, bezogen auf die Summe der genannten Bestandteile A) bis D):
| | | |
|---|---|---|
| A) | 73-100Gew.-% | Wasserbasierende Acrylat-Copolymer-Dispersion |
| B) | 0-2Gew.-% | Entschäumer |
| C) | 0-20Gew.-% | Wasser und |
| D) | 0-5Gew.-% | Netzmittel; |
die Grenzwerte jeweils mitumfassend, enthält.

2. Druckvorlack nach Anspruch 1, **dadurch gekennzeichnet, dass** die Komponente A) eine wässerige Dispersion eines Styrol-Acrylat-Copolymers in Kombination mit einem Aminoharz, bevorzugt einem Benzoguanaminharz, ist, und dass der Wassergehalt, bezogen auf die Komponente A) insgesamt, zwischen 55% bis 65%, bevorzugt zwischen 59% und 61% liegt.

3. Druckvorlack nach Anspruch 1 oder 2, **dadurch gekennzeichnet, dass** ihm zur Farbgebung sterilisationsbeständige Pigmente oder Pigmentpräparationen zugesetzt werden.

4. Druckvorlack nach Anspruch 3, **dadurch gekennzeichnet, dass** die Pigmente aus der Gruppe der sogenannten Azopigmente oder der sogenannten "Nichtazopigmente" oder "Polycyclischen Pigmente" fallen, insbesondere der beta-Naphthol-Pigmente, der Naphthol AS-Pigmente, der Pyrazolon-Pigmente, der N-Acetessigsäureanilid-Pigmente, der Azometallkomplex-Pigmente und der Diaryl-Gelb-Pigmente; der Chinacridon-Pigmente, der Diketopyrrolo-pyrrol-Pigmente, der Dioxazin-Pigmente, der Perylen-Pigmente, der Isoindolinon-Pigmente und der Kupfer-Phthalocyanin-Pigmente.

5. Druckvorlack nach Anspruch 3, **dadurch gekennzeichnet, dass** für Gelb das Pigment Gelb 83, eine chemische Verbindung aus der Gruppe der Disazo- und Diarylpigmenten verwendet wird, für Rot das Pigment Rot 146, ein Mono-Azopigment, oder Rot 184, ein Naphtol AS Pigment, oder Rot 254, das3,6-Bis (4-chlorphenyl) -2,5-dihydropyrrolo [3,4-c] pyrrol-1,4-dion).

6. Druckvorlack nach einen der voranstehenden Ansprüche, **dadurch gekennzeichnet, dass** als Komponente B) organische Polymere, wie Polyether oder Polyacrylate; Dimethylpolysiloxane, Silikonöle oder Floursilicone verwendet werden.

7. Druckvorlack nach einen der voranstehenden Ansprüche, **dadurch gekennzeichnet, dass** als Komponente D) Silicontenside oder Kohlenwasserstofftenside verwendet werden.
